# EUROPEAN PATENT SPECIFICATION

(11) **EP 1 442 384 B1**
(45) Date of publication and mention of the grant of the patent: **24.02.2010**
(21) Application number: 02737573.2
(22) Date of filing: 20.06.2002
(51) Int. Cl.: H04L 12/56, H04L 12/26

(54) **AUTOMATED CONTROL OF OUTBOUND TRANSIT LINKS IN A MULTI-HOMED BGP ROUTING ENVIRONMENT**
AUTOMATISIERTE STEUERUNG ABGEHENDER TRANSITSTRECKEN IN EINER MEHRFACH-HEIMAT-BGP-ROUTING UMGEBUNG
CONTROLE AUTOMATIQUE DE LIAISONS DE TRAFIC SORTANT DANS UN ENVIRONNEMENT DE ROUTAGE BGP (BORDER GATEWAY PROTOCOL) A MULTI-RATTACHEMENT

(30) Priority: 22.06.2001 US 887655
(43) Date of publication of application: 04.08.2004
(73) Proprietor: Akamai Technologies, Inc., Cambridge, MA 02139 (US); Freedman, Avraham, T., Elkins Park, PA 19027 (US)
(72) Inventor: FREEDMAN, Avraham, T., Elkins Park, PA 19027 (US)
(74) Representative: Hirsz, Christopher Stanislaw
(86) International application number: PCT/US2002/019734
(87) International publication number: WO 2003/001330

(56) References cited:
- WO-A-01/13585
- FREEDMAN A.: 'Multi-homing with an without BGP4' ISP TECH TALK May 1997, pages 1 - 12, XP002960057
- FREEDMAN A.: 'Ethel the AArdvark goed BGP routing' ISP TECH TALK July 1997, pages 1 - 9, XP002960056
- BATES T. ET AL.: 'Scalable support for multi-homed multi-provider connectivity, RFC 2260' NETWORK WORKING GROUP January 1998, pages 1 - 11, XP002960055
- HAGINO J. ET AL.: 'IPv6 multihoming support at site exit routers, RFC 3178' NETWORK WORKING GROUP October 2001, pages 1 - 11, XP002960054

## Description

### BACKGROUND OF THE INVENTION

This application is based on and claims priority from United States Application Serial No. 09/887,655, filed June 22, 2001 (published as US 2002/199016).

### Technical Field

The present invention relates generally to techniques that enable networks and business entities to intelligently optimize their Internet connectivity, thereby improving network performance, stability and visibility.

### Description of the Related Art

To be connected to the Internet, a network needs to be able to send data (in the form of IP packets) to every valid IP address (i.e., host) on the Internet. Equally important, all of the hosts on the internet need to know how to send data to the network. A "single-homed" network is one that is connected to the Internet by one "upstream provider." In such case, all of the network's non-local IP traffic (i.e., traffic destined to the Internet) is sent to that provider; likewise, all of the network's non-local IP traffic that comes from the Internet will come into the network from that provider. A single-homed network, by its nature, is completely dependent on the uptime and quality of the network's one upstream service provider, as well as the network's border router and link to that provider. If any of these components fail, then the upstream provider cannot send data to the network. Moreover, if the upstream provider becomes disconnected from the Internet or has some major internal routing problem, then the single-homed network is disconnected from some or all of the Internet. A "multi-homed" network, in contrast, is one that is connected to the Internet by two or more "upstream" Internet providers. Most Internet Service Providers (ISPs) find it necessary or desirable to multi-home to provide additional bandwidth and redundancy to their customers.

Whether single- or mufti-homed, a network's routes are "advertised" by the upstream provider(s). As is well known in the art, an advertisement represents a "promise" to carry traffic to various sections of the network's IP space. Providers use the BGP4 protocol (RFC 1771) to advertise routing information to each other. BGP4 is a protocol spoken between autonomous systems, and each autonomous system has an Autonomous System Number (ASN). Routers at the border of various autonomous systems exchange routes with each other via BGP in so-called peering sessions. When a network is multi-homed, there are two or more routes for each one of the network's IP blocks. Thus, the network can sustain a complete loss of a link to or other severe problems with one of its upstream providers without impacting a network customer's quality of service.

Several multi-homing solutions are known from, for example, FREEDMAN A.: 'Multi-homing with an without BGP4' ISP TECH TALK May 1997, pages 1 - 12, XP002960057, FREEDMAN A.: 'Ethel the AArdvark goed BGP routing' ISP TECH TALK July 1997, pages 1 - 9, XP002960056, BATES T. ET AL.: 'Scalable support for multi-homed multi-provider connectivity, RFC 2260' NETWORK WORKING GROUP January 1998, pages 1 - 11, XP002960055, and WO 01/13585, which discloses a system in which a multi-homed customer connected to a Private Network Access Point (PNAP) is provided with access to the PNAP optimized routing table so that the customer will also have the ability to know the best route for a particular destination. In this way, if a multi-homed customer connected to the PNAP is directly connected to a particular NSP to which a destination is also connected, the PNAP customer can use the PNAP information regarding the NSP to send the information to the destination through that commonly connected to NSP in the most direct fashion.

Multi-homed solutions are not limited to the internetworking environment. Today, most enterprises are dependent on Internet connectivity to connect offices in multiple locations and conduct their normal business (e.g., email, virtual private networks, IP videoconferencing and telephony, etc.). To prevent a single point of failure and attempt to ameliorate the vagaries of single network performance, these enterprises have turned to multi-homing for all of their primary offices. This means that each office has multiple transit connections to the Internet so that if there is a problem with one connection, the other can be used. Multi-homing is a standard practice for IT departments in many mid-size and larger entities.

While multi-homing solutions provide advantages, they are expensive and do not always offer the performance gains sought by many Internet Service Providers or enterprises. Thus, for example, in the network context, performance gains may not be achieved even with multi-homing solutions because such solutions necessarily rely on BGP. BGP suffers from several deficiencies including: slow changes to routing paths, which can cause performance degradation as paths are recomputed, an inability to know about or react to Internet congestion on various local and remote networks, and a lack of effective means of load balancing. In particular, multi-homed ISPs have not been able to route intelligently or to factor costs into their routing decisions. Absent such a solution, these organizations must hire and dedicate personnel to deal with poorly performing connections and to perform constant tweaking to attempt to improve the performance and cost of connectivity to upstream providers.

Thus, it is known in the prior art for a network to use an operator to manually "tune" the router's configuration in response to some stimulus. Thus, for example, assume that a multi-homed router at a network border is set to prefer a given destination AS through a given first transit AS but that a user in the given destination AS notifies that operator that she is having trouble reaching a Web site behind the router. Upon becoming aware of this connectivity problem, the router operator performs connectivity tests and learns that connectivity to the given destination AS is served better through a different transit AS (as opposed to the first transit AS). The operator then manually modifies the router's policy configuration, which has the effect of telling the router to reevaluate all routes heard from the newly-preferred transit AS and to modify BGP attributes to make packets to the destination AS go out the new transit AS. The process thus involves several human steps: having the operator respond to connectivity problem reports that are correlated, test to decide what the best new path is, and to modify the router configuration manually to attempt to address the problem. Thus, the approach is both manual and reactive, as opposed to being automated and proactive.

### BRIEF SUMMARY OF THE INVENTION

The present invention overcomes these and other problems associated with the prior art by providing an apparatus, a method and a router in accordance with the attached claims. In preferred embodiments, there is provided a method and system for automated and proactive local link testing, preferably to a specified set of "core" points in each destination AS, with the resulting data being useful for automatically instructing a host router to re-prefer given outbound paths on a granular network-by-network basis or, if appropriate, even to shut down poorly-performing upstream Internet connections (e.g., if a transit AS cannot get to itself well). The invention may be implemented as a managed service or as a product that enhances network performance, increases network availability and improves network visibility for businesses using multi-homed BGP to connect to the Internet. In an illustrative embodiment, the invention is a method and system that enables a provider (e.g., an ISP, enterprise or the like) to set automatically, or to have suggested, a router configuration based generally on traffic analysis of the Internet. Thus, for example, the invention enables a provider to select a best transit path out and back for a multi-homed network, system, or machine as a function of network performance measurements to a set of destination locations.

In a representative embodiment, the present invention is implemented in a system, machine, device or program as an adjunct or "companion" to an existing router that is multi-homed to at least first and second transit Autonomous Systems (TASs) that connect to a plurality of destination Autonomous Systems (DASs). In this embodiment, the invention comprises three (3) high level processes. A first process ("path testing") conducts local traffic analysis of outgoing packets transmitted from the mechanism to a set of IP addresses across different DASs that may be selected by an operator via a configuration file or suitable interface (e.g., GUI, CLI, or the like). In an illustrative embodiment, ICMP (i.e., "ping") packets are used for the path testing. To perform path testing via a particular link and transit AS, the path testing process temporarily inserts (into the router configuration) more specific overriding test routes to which to send the ping traffic. These test routes are inserted, for example, by logging into the router and using static routes, or via internal BGP (iBGP) injection. A configurable number of ping packets (of a configurable size) are sent through each TAS to every scan point (i.e., a "core" point) within each DAS, and ping loss data is collected. Following the test, the more specific overriding test routes are withdrawn from the router configuration. The data collected by this scanning process is then supplied to a second process ("path evaluation"), which is a decision algorithm for evaluating path quality for each TAS/DAS path to/from the router. A path whose quality is below a configurable threshold is a candidate for re-routing. In a representative embodiment, the decision algorithm identifies (for re-routing) a biggest transit AS (traffic-wise) that is having a connectivity problem to a particular destination AS for a given number of test rounds. The third process ("path selection") either recommends or, if enabled, executes path changes, e.g., by logging into the router and entering a new policy configuration. This has the effect of telling the router to reevaluate all routes heard from the selected TAS in view of the new policy. The path testing, evaluation and (when enabled) selection processes operate autonomously and in an automated fashion to control outbound transit links. Preferably, all router configuration changes are performed locally to the route such that route updates are not announced to the upstream (TAS) providers.

The foregoing has outlined some of the more pertinent objects and features of the present invention. These objects should be construed to be merely illustrative of some of the more prominent features and applications of the invention.

### BRIEF DESCRIPTION OF THE DRAWINGS

**Figure 1** is a simplified block diagram illustrating the inventive mechanism as an "adjunct" or companion to an off-the-shelf router;
**Figure 2** illustrates a BGP networking environment in which the present invention may be implemented to provide automated control of outbound transit links associated with the router of **Figure 1**;
**Figure 3** is a flowchart illustrating the high level functionality of the router companion mechanism of the present invention;
**Figure 4** is an illustrative router configuration generated automatically by the router companion for a router (e.g., a Cisco Systems router) that uses route maps; and
**Figure 5** is an illustrative router configuration generated automatically by the router companion for a router (e.g., a Juniper Networks router) that uses policy-statements.

### DETAILED DESCRIPTION OF THE PREFERRED EMBODIMENT

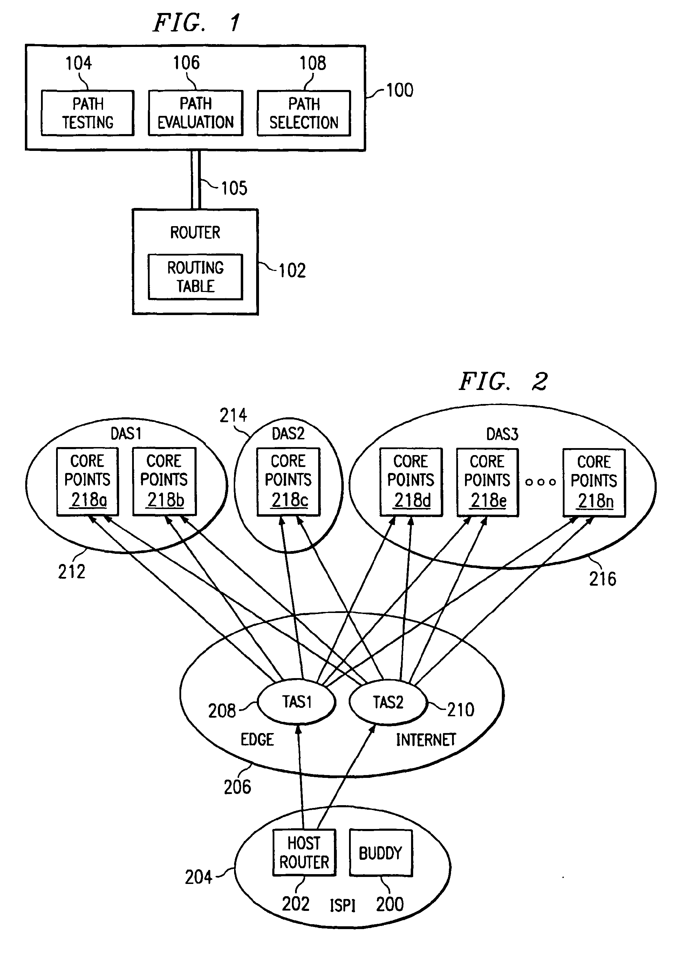

**Figure 1** is a simplified block diagram illustrating the inventive mechanism **100** as an "adjunct" or companion to an off-the-shelf router **102** (e.g., such as a router manufactured by Cisco Systems, Juniper Networks, Lucent Technologies, Nortel Networks, a Unix-based PC running GateD routing software, or the like). Typically, the mechanism **100** is implemented as computer software executable by a processor, e.g., in commodity PC hardware. In an illustrative installation, the mechanism **100** is connected to the router **102** via Ethernet **105** or via other suitable connectivity. As illustrated in **Figure 1** and as described briefly above, the mechanism comprises three (3) main processes or functions: a path testing process **104,** a path evaluation process **106,** and a path selection process **108.** These processes are shown as separate and distinct merely for illustrative and discussion purposes. They may be integrated into one or more processes, modules, routines, execution threads, or other known programming constructs. One or more of the processes typically include other sub-processes or functions described below. The functionality may be implemented in whole or in part in firmware, in specially-designed hardware, or in any other convenient manner. While the mechanism preferably is an adjunct to an existing router, the functionality may be built into the router directly or provided as an after-market solution. In either case, it may be desirable to have the functionality installed, configured, monitored and controlled by a third party service provider as a "managed" service offering. Also, the mechanism may be installed in a redundant configuration, with one unit operating as a primary and the other as a backup. Thus, one of ordinary skill will appreciate that the inventive functionality requires no unique or specific implementation but rather simply leverages existing hardware, software and internetworking technologies.

**Figure 2** illustrates how the inventive mechanism is used to provide automated control of outbound transit links in a multi-homed BGP routing environment. For purposes of the following discussion, familiarity with BGP is presumed. Details can be found in RFC 1771. In this example, the companion **200** and multi-homed router **202** are hosted in an Internet Service Provider (ISP) facility **204** that connects the router to the Internet **206** via at least two (2) transit Autonomous Systems, TAS1 **208** and TAS2 **210.** This number is merely representative. Any traffic from the host router to a destination AS (DAS) flows through a TAS. Although the invention is illustrated here in the context of an ISP customer, this is not a limitation of the invention. One of ordinary skill will appreciate that the mechanism also may be used within any multi-homed enterprise environment.

**Figure 2** also shows three (3) potential destination Autonomous Systems: DAS1 **212,** DAS2 **214,** and DAS3 **216.** This number is merely representative. As will be described, the router companion mechanism of the present invention uses one or more network tests to determine the performance of Internet paths through the transit Autonomous Systems to a variety of machines, called "core" or "scan" points **218a-n,** in one or more destination Autonomous Systems. As used herein, a core point is typically a network device (e.g., a local name server or other host) that responds to one or more measurement probes. Core points may be public, in the sense that they can be seen from any point outside the DAS, or private, in which case they are not always available to be seen. A representative core point may also be representative of a set of machines in the DAS that, from the perspective of a given network location outside the DAS, share the point in terms of some given metric such as reachability. Typically, a core point is a router on the Internet, although this is not a requirement. According to the invention, one or more network performance tests are undertaken to determine the performance of the Internet paths to one or more "core" points in each of a set of candidate destination Autonomous Systems, and the resulting data is then evaluated and used to modify the routing configuration of the router **202** to control outbound link traffic. In particular, and as will be described in more detail below, when the mechanism detects that a first transit link is performing poorly, it selects the other transit link for the affected traffic and modifies the routing attributes of the router to retarget the outbound traffic to that link. This control of the exterior BGP (eBGP) behavior of the router is preferably accomplished by changing the router configuration through a script or command line interface (CLI), or by "whispering" new route information through an internal BGP (iBGP) peering session. In either case, preferably the control is carried out transparently to the data path and does not affect the router's intrinsic forwarding performance.

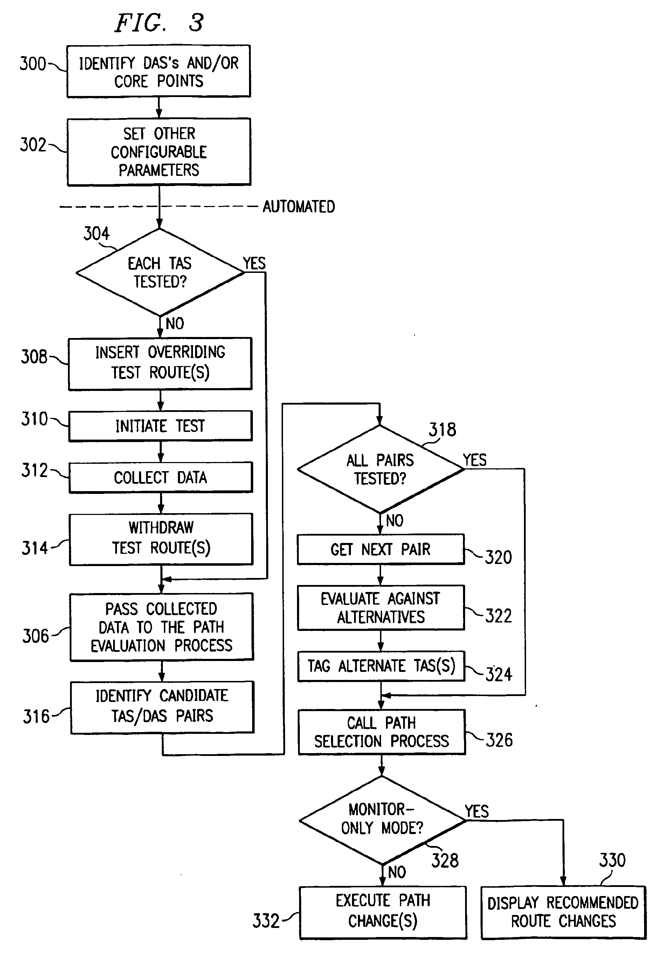

**Figure 3** is a flowchart illustrating the high level operation of the router companion mechanism of the present invention. As the mechanism preferably is implemented on commodity PC hardware, it is assumed an operator has access to the mechanism through a conventional graphical user or command line interface. A convenient mechanism is a web-based interface that uses a browser or other similar program. At step **300,** the operator (directly or through a third party service provider) identifies a set of destination Autonomous Systems and/or core points of interest therein that are to be probed. In a representative embodiment, the core points are customer- or third party-identified Autonomous Systems that are important for optimal performance to and from the network. The destination Autonomous Systems may simply be a list of some number (e.g., thirty (30), which is merely representative) Internet networks that have significant traffic as determined by customer logs or other usage data. The core points may be any convenient locations within a given AS (i.e., sub-AS) and may be obtained from any convenient source including being sourced by the router (e.g., from flow data generated by the router or other local routers). More specific destination points (Very Important Prefixes (VIPs), such as /24 routes) may also be identified. Preferably, large numbers of core points on slow links should be avoided to prevent overloading of communication links. Moreover, because router traffic destined for an address may be affected by insertion of the test routes, it is desirable when configuring the core points to select points that are proximal to likely destination points, not necessarily the actual destination point. At step **302,** the operator may also set other configurable parameters, such as the type, frequency and packet size of the probes, or whether the test probes are to be initiated from the router companion ("off-router") or directly from the router ("on-router"). In the latter case, the mechanism connects to the router's own CLI and sends commands to it to initiate the tests. The operator may also provision the probes to be symmetric or asymmetric. If desired, the operator may also set one or more link change parameters to control rerouting and thereby dampen route changes, both with respect to total volume over time and frequency for a particular TAS/DAS or TAS/other core point pair. Thus, for example, a link change parameter may be set to limit the frequency with which a given pair may be rerouted, the maximum number of pairs that will be switched in any particular test round, and the like. A configurable parameter may also be set to permit the mechanism to disable actual route changes but, instead, to operate in a "monitor only" mode whereby proposed route switches are only displayed. Preferably, other than setting of such configurable parameters through an appropriate interface, no other manual intervention is required.

The mechanism then begins its automated operation. At step **304,** a test is performed to determine whether each TAS has been tested. If so, the routine branches to step **306,** as will be described below. If, however, the result of the test at step **304** indicates another TAS needs to be tested, the routine continues at step **308.** At this point, the path testing process temporarily inserts one or more overriding test routes (preferably 32 bit addresses, corresponding to the core points) into the router configuration for each DAS to be probed from that TAS. As is well known, every machine that speaks TCP/IP has an "IP routing table," which tells the machine where to send IP packets. Each IP packet has a source address and a destination address. For every packet that comes into a router, the machine's IP software looks at the destination IP address and tries to find the "tightest fitting" or most specific route that matches this address. At step **308,** the path test process inserts the set of more specific overriding test routes into the router table, e.g., by logging into the router and using static routes, via an iBGP peering session (between the mechanism and the router), or by any other convenient means. The routine then continues at step **310**.

At this point, the path test process initiates the test probes (as noted above, either directly or through the router CLI depending on configuration). In an illustrative embodiment, the router companion makes measurements to core points using Internet Control Messaging Protocol (ICMP) (or so-called "ping" packets) to evaluate such information as round trip times (RTTs), packet loss, and number of router hops. Preferably, ping packets are small in size and are sent with a deliverable timeout (e.g., on the order of 100ms). The timeout setting has the effect of providing both packet drop and delay information, as it basically establishes a test probe "network diameter" with two dimensions, but using only a single measurement. As noted above, the ICMP probes can be generated by the router companion through a command line interface (CLI) to the router, or the probes can be generated by the software for transmission through the router. The latter technique is preferred. Thus, at step **310,** a configurable number of ping packets are sent through the TAS to every core point within each DAS. At step **312,** data is collected. In particular, return packets (where ICMP is used) are either an ICMP echo reply (a "good" response, meaning the core point is reachable), an error message, or the packets are lost. Preferably, no return packet or error packet are considered "lost" for purposes of the subsequent calculation. After the data for the particular set of test routes is collected, the more specific overriding test routes are withdrawn from the router configuration. This is step **314.** The routine then cycles back to get the next TAS and the measurement process repeats.

When all of the TAS/DAS pairs have been tested in this manner (a so-called scanning "round"), the routine continues at step **306.** Preferably, the frequency of a round is a configurable parameter and may be on the order of five (5) minutes in an illustrative embodiment. At this point, the path evaluation process receives the collected data and assesses path quality for each TAS/DAS (or TAS/intra-DNS) pair. At step **316,** the routine identifies pairs whose quality is below a configurable threshold (for one or more rounds, with the number of rounds being a configurable parameter) and tags such pairs as candidates for rerouting. At step **318,** the routine tests to determine whether all candidate pairs have been evaluated for re-routing. If so, the routine branches to step **326.** If not, however, the routine gets the next candidate pair at step **320.** At step **322,** the routine evaluates each alternate TAS to determine whether the alternate TAS provides better performance. If an alternate TAS provides better performance, the alternate TAS is tagged at step **324** (and thus may be used for re-routing). When all candidate pairs have been evaluated for re-routing, the routine continues with path selection.

In particular, at the completion of the path evaluation process, the path selection process is called. This process begins at step **326.** At step **328,** a test is performed to determine whether the mechanism is set for monitor only mode. If so, the routine branches to step **330** to display (but not necessarily implement) one or more "recommended" route changes. If the outcome of the test at step **328** is negative, the routine executes the path changes based on the configurable link change parameters enabled for the particular round. This is step **332.** In an illustrative embodiment, this is achieved by having the mechanism (a) set a BGP Local Preference ("Local-Pref") attribute to influence transit link selection (for AS level granularity change), (b) by inserting static "fixer" routes specifying the immediate next hop (for fine-grained route changes (e.g., VIPs) that do not span an entire AS), or by some combination thereof. The fixer routes may be inserted using an iBGP peering session. For an AS granularity change, an illustrative route change would instruct the router (the equivalent of) "please move all DAS prefixes and prefer them through TAS2 instead if TAS1" if the latter is determined to be poorly-performing (given a configurable threshold for a configurable number of rounds). A fine-grained route change might be represented as follows: "match_174_ in the AS_PATH of the routers heard from AS 1239 and set the LOCAL_PREF to 100000." Of course, these are merely illustrative route change examples. As noted above, preferably all router configuration changes are performed locally to the router so that, preferably, route updates are not announced (by the router being manipulated) to routers in the upstream providers.

The path evaluation algorithm may operate in a simple round robin manner or implement more fine-grained decisions. Thus, for example, if a particular DAS is having internal reachability problems for one or more rounds through a given TAS, the process may simply control the router to move traffic to that DAS to a randomly-selected, but better performing TAS connection. A particular embodiment tests to determine whether a destination AS has had reachability problems through a given TAS (e.g., a biggest TAS, traffic-wise) or set of transit AS's) for a given number (i.e., n) of rounds. By evaluating over a number of rounds, the algorithm provides a "smoothing" characteristic to any potential router configuration change. A more complex decision may involve one or more cost metrics such as "when moving an AS, prefer TAS1 over TAS2 and TAS3 if all other costs are equal." This would be useful in the situation where TAS2 and TAS3 are smaller networks or more expensive. In an alternative embodiment, the path evaluation algorithm determines if the performance to a given DAS (or IP address therein) is a given number of times (e.g., 2x) better than some of the transit network connections than for others for a given number of rounds (e.g., 2). If such case, for example, AS_PATH access lists are built and loaded into the router table to effect the routing change. Of course, one of ordinary skill in the art will appreciate that the particular path evaluation algorithm is not a limitation of the invention and that any convenient metric and decision process may be used. Moreover, it is not required that decisions be based solely on the properties of the local transit links. Thus, for example, in yet another embodiment, a given data feed may identify other "bad" paths (whether local or remote) that need to be avoided during the path evaluation process.

Thus, according to the present invention, once the router companion mechanism is initialized and activated, the mechanism automatically manipulates the router's BGP configuration in accordance with configurable parameters. The operator (or other service provider) can permit TAS link changes or simply demonstrate recommend changes (in monitor-only mode). Preferably, the mechanism configures the router through a secure (e.g., SSH) connection into the router configuration program (and thus the router table), or through BGP "whispering," i.e., by establishing an iBGP peering session (between the path selection process and the router) to enable the mechanism to provide route updates in the same way as any iBGP peer.

Optionally, the router companion includes one or more additional processes, such as one or more logging routines to record core point lists, probe measurement history, link change history, proposed and actual router configuration change history, and other such historical data. Typically, the router mechanism includes an alert system for escalating alerts via paging and/or e-mail if a particular TAS/DAS or TAS/intra-DAS link is down or becomes impaired by a significant degree. The mechanism may also include an internal diagnostic routine for self-testing and debugging.

One of ordinary skill will appreciate that the above-described embodiment is merely illustrative and that the inventive functionality may be implemented with one or more variants. Thus, for example, in addition to or in lieu of ICMP testing, the link testing may evaluate other metrics such as latency, round trip time, or the like. As also described above, the particular decision algorithm used for the path evaluation process may vary and depend on local or remote link data, cost data, or other metrics. The invention may be implemented within an existing router, and it may used with multiple routers.

The router companion mechanism of the present invention provides many advantages. As has been described in detail above, the mechanism continuously measures real-time traffic performance to a variety of destinations such as user-configured Autonomous Systems, user-configured VIP locations, or other potential problem sites. In this way, the mechanism provides a clear picture of current network performance and bottlenecks in and around the network in general and the router in particular. This automated technique is far superior to the manual configuration methods typical of the prior art, wherein rough measures of link capacity are used to determine best paths and the router is manually configured. The mechanism is advantageous in that it enables dynamic redirection of outgoing network traffic to a best transit AS, using performance and, optionally, other metrics such as link cost. This approach to BGP multi-homing provides several benefits including, without limitation, improved traffic performance through optimal selection of AS or sub-AS transit links, greater availability by selecting those links with the best prospects of routing around failures, reduced link utilization costs and, as a by-product, improved performance for ebusinesses that use the network. The mechanism preferably functions outside and apart from the router's normal data forwarding paths so it does not slow down the router's intrinsic forwarding performance. This enables the operator or a managed service provider to select whether changes to the router's configuration are performed via script, command line, or using an iBGP peering session. Thus, in the unlikely event of a failure of the mechanism, the router gracefully reverts to its prior state. Moreoever, the mechanism enables flexible configuration of remote test points, which permits performance measurement of those Autonomous Systems of most interest. This enables the network or the managed service provider to change probe points as business needs dictate. Finally, the mechanism is simple and cost-effective to implement, operate and use, especially as compared to the manual techniques of the prior art.

### EXAMPLES:

### 1. Cisco Router Configuration

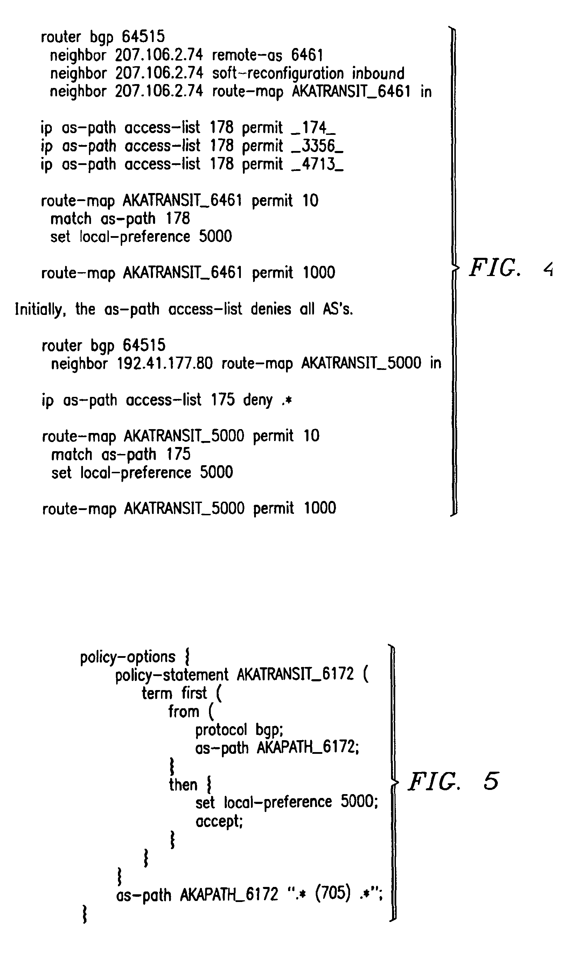

As noted above, the router route packets for a particular destination AS through a particular transit AS. The transit AS preferably is selected by means of a route map that sets a local preference value high enough to enforce selection of the transit AS. **Figure 4** illustrates an example of a Cisco router configuration generated automatically by the router companion. As is well known, route-maps are the mechanism used in Cisco routers to select and modify routes with if/then style algorithms. When switching the transit link for a destination AS, the mechanism swaps access-lists.

### 2. Juniper Networks Router Configuration

In a router of this type, the transit AS is selected using a policy-statement that accepts routes by means of an AS path selection and attaches a high local preference value to enforce the preferred next-hop transit link. **Figure 5** illustrates an example of a router configuration generated automatically by the router companion for this router. Initially, the operator installs the policy-statement and an as-path access-list that does not match any route. When switching a destination AS from the current transit AS, the destination AS is added to the regular expression of the as-path access-list of the new transit AS and deleted from the regular expression of the as-path access-list of the current transit AS. The policy statement remains unchanged.

Having described my invention, what I claim is as follows.

## Claims

1. Apparatus for use with a multi-homed router (202) connectable to a plurality of destination networks (212, 214, 216) through at least first and second transit networks (208, 210), **characterised by** means arranged to:
initiate, in accordance with a set of one or more configurable parameters, periodic path quality measurements for each path of a set of paths comprising transit network/destination network link pairs by configuring an overriding test route identifying each transit network/destination network link pair into the router (202) at the time of the path quality measurement and then withdrawing it after the measurement;
evaluate, following the path quality measurements, whether a first transit network/destination network link pair is a candidate for rerouting to a second transit network/destination network link pair; and
facilitate, responsive to satisfaction of a given path evaluation criteria, reroute from the first to the second transit network/destination network link pair.

2. The apparatus as described in Claim 1 further including an interface for enabling setting of the one or more configurable parameters.

3. The apparatus as described in Claim 2 wherein the configurable parameters include a probe type.

4. The apparatus as described in Claim 3 wherein the probe type is an ICMP packet.

5. The apparatus as described in Claim 2 wherein the configurable parameters include a list identifying destination network link pairs to be evaluated.

6. The apparatus as described in Claim 2 wherein the configurable parameters include a given IP address within a given destination network.

7. The apparatus as described in Claim 1, wherein the means is further arranged, responsive to satisfaction of the given path evaluation criteria, to output a recommendation illustrating a reroute from the first to the second transit network/destination network link pair.

8. The apparatus as described in Claim 1, wherein the means is arranged to configure the test route into the router by establishing an internal BGP (iBGP) peering session over which routing update information identifying the test route is passed.

9. The apparatus as described in Claim 1, wherein the means is arranged to configure the test route into the router by establishing a secure connection between the apparatus and a configuration program executing in the router.

10. A method of controlling a multi-homed router (202) connectable to a plurality of destination networks (212, 214, 216) through at least first and second transit networks (208, 210), **characterised by** the steps of:
periodically conducting path quality measurements for each path of a set of paths comprising transit network/destination network link pairs, wherein an overriding test route identifying each transit network/destination network link pair is configured into the router (202) at the time of the path quality measurement and then withdrawn after the measurement;
following the path quality measurements, evaluating whether a first transit network/destination network link pair is a candidate for rerouting to a second transit network/destination network link pair; and
responsive to satisfaction of a given path evaluation criteria, facilitating a reroute from the first to the second transit network/destination network link pair.

11. The method as described in Claim 10 wherein the path quality measurements are conducted by means of ICMP outgoing packets.

12. The method as described in Claim 10 wherein the best transit network for a given destination network (212, 214, 216) is selected according to a given path evaluation algorithm.

13. A multi-homed router (202) connectable to a plurality of destination networks (212, 214, 216) through at least first and second transit networks (208, 210), **characterised by** means arranged to:
initiate, in accordance with a set of one or more configurable parameters, periodic path quality measurements for each path of a set of paths comprising transit network/destination network link pairs by configuring an overriding test route identifying each transit network/destination network link pair into the router at the time of the path quality measurement and then withdrawing it after the measurement;
evaluate, following the path quality measurements, whether a first transit network/destination network link pair is a candidate for rerouting to a second transit network/destination network link pair; and
facilitate, responsive to satisfaction of a given path evaluation criteria, a reroute from the first to the second transit network/destination network link pair.

## Patentansprüche

1. Vorrichtung zur Verwendung mit einem mehrfach vernetzen Router (202), der mit einer Mehrzahl von Zielnetzwerken (212, 214, 216) über wenigstens erste und zweite Übergangsnetzwerke (208, 210) verbindbar ist, **dadurch gekennzeichnet, dass** Mittel vorgesehen sind, um gemäß einem Satz von ein oder mehreren konfigurierbaren Parametern periodischer Wegqualitätsmessungen für jeden Weg eines Satzes von Wegen zu initiieren, die Übergangsnetzwerk/Zielnetzwerkverbindungspaare aufweisen, indem eine überbrückende Testroute, die jedes Übergangsnetzwerk/Zielnetzwerkverbindungspaar identifiziert, zur Zeit der Wegqualitätsmessung in dem Router (202) konfiguriert wird und nach der Messung aufgehoben wird, Auswertung im Anschluss an die Wegqualitätsmessung, ob ein erstes Übergangsnetzwerk/Zielnetzwerkverbindungspaar ein Kandidat zur Umleitung zu einem zweiten Übergangsnetzwerk/Zielnetzwerkverbindungspaar ist und Ermöglichen einer Umleitung von dem ersten zu dem zweiten Übergangsnetzwerk/Zielnetzwerkverbindungspaar, in Abhängigkeit von der Erfüllung eines gegebenen Wegeauswertungskriteriums.

2. Vorrichtung nach Anspruch 1, welche ferner ein Interface enthält, um ein oder mehrere konfigurierbare Parameter einzustellen.

3. Vorrichtung nach Anspruch 2, bei dem die konfigurierbaren Parameter einen Testtyp enthalten.

4. Vorrichtung nach Anspruch 3, bei dem der Testtyp ein ICMP-Paket ist.

5. Vorrichtung nach Anspruch 2, bei dem die konfigurierbaren Parameter eine Liste enthalten, die Zielnetzwerkverbindungspaare identifizieren, die auszuwerten sind.

6. Vorrichtung nach Anspruch 2, bei dem die konfigurierbaren Parameter eine feste IP-Adresse innerhalb eines gegebenen Zielnetzwerks enthalten.

7. Vorrichtung nach Anspruch 1, bei dem die Mittel ferner so eingerichtet sind, dass sie in Abhängigkeit von der Erfüllung der gegebenen Wegeauswertungskriterien eine Empfehlung ausgeben, die eine Umleitung des ersten zum zweiten Übergangsnetzwerk/Zielnetzwerkverbindungspaar illustrieren.

8. Vorrichtung nach Anspruch 1, bei dem die Mittel so eingerichtet sind, dass eine Testroute in dem Router konfiguriert wird, um eine interne BGP (iBGP)-Paarungssitzung zu etablieren, über die Routing-Update-Informationen, die die Testroute identifizieren, geleitet werden.

9. Vorrichtung nach Anspruch 1, bei dem die Mittel so eingerichtet sind, dass die Testroute in dem Router durch Aufbau einer sicheren Verbindung zwischen der Einrichtung und einem in dem Router ausgeführten Konfigurationsprogramm konfiguriert wird.

10. Verfahren zur Steuerung eines mehrfach vernetzten Routers (202), der mit einer Mehrzahl von Zielnetzwerken (212, 214, 216) über wenigstens erste und zweite Übergangsnetzwerke (208, 210) verbindbar ist, **gekennzeichnet durch** folgende Schritte:
Periodisches Durchführen von Wegqualitätsmessungen für jeden Weg eines Satzes von Wegen, welcher Übergangsnetzwerk/Zielnetzwerkverbindungspaare enthält, wobei eine Umleitungs-Testroute, die jedes Obergangsnetzwerk/Zielnetzwerkverbindungspaar identifiziert, in dem Router (202) zur Zeit der Wegqualitätsmessung konfiguriert wird und dann nach der Messung aufgehoben wird,
Verfolgen der Wegqualitätsmessungen, Auswerten, ob ein erstes Übergangsnetzwerk/Zielnetzwerkverbindungspaar ein Kandidat zum Umleiten zu einem zweiten Übergangsnetzwerk/Zielnetzwerkverbindungspaar ist, und in Abhängigkeit von der Erfüllung eines gegebenen Wegeauswertungskriteriums, Ermöglichen einer Umleitung von dem ersten zu dem zweiten Übergangsnetzwerk/Zielnetzwerkverbindungspaar.

11. Verfahren nach Anspruch 10, bei dem die Wegqualitätsmessungen mit Hilfe von ausgehenden ICMP-Paketen durchgeführt werden.

12. Verfahren nach Anspruch 10, bei dem das beste Übergangsnetzwerk für ein gegebenes Zielnetzwerk (212, 214, 216) entsprechend einem gegebenen Wegeauswertungsalgorithmus ausgewählt wird.

13. Mehrfach vernetzter Router (202), der mit einer Mehrzahl von Zielnetzwerken (212, 214, 216) über wenigstens erste und zweite Übergangsnetzwerke (208, 210) verbindbar ist, **gekennzeichnet durch** Mittel, die ausgebildet sind, um gemäß einem Satz von einem oder mehreren konfigurierbaren Parametern periodische Wegqualitätsmessungen für jeden Weg eines Satzes von Wegen zu initiieren, die Übergangsnetzwerk/Zielnetzwerkverbindungspaare enthalten, indem eine überbrückende Testroutine konfiguriert wird, die jedes Obergangsnetzwerk/Zielnetzwerkverbindungspaar im Router zur Zeit der Wegqualitätsmessung identifiziert und anschließendes Aufheben nach der Messung, Auswerten im Anschluss an die Wegqualitätsmessungen, ob ein erstes Übergangsnetzwerk/Zielnetzwerkverbindungspaar ein Kandidat zur Umleitung zu einem zweiten Übergangsnetzwerk/Zielnetzwerkverbindungspaar ist und Ermöglichen einer Umleitung von dem ersten zu dem zweiten Übergangsnetzwerk/Zielnetzwerkverbindungspaar gemäß der Erfüllung eines gegebenen Auswertungskriteriums.

## Revendications

1. Dispositif destiné à être utilisé avec un routeur à rattachement multiple (202) pouvant être connecté à une pluralité de réseaux de destination (212, 214, 216) par l'intermédiaire au moins de premier et deuxième réseaux de transit (208, 210), **caractérisé par** des moyens agencés pour :
lancer, conformément à un ensemble d'un ou de plusieurs paramètres configurables, des mesures de qualité de trajet périodiques pour chaque trajet d'un ensemble de trajets comprenant des paires de liaisons de réseau de transit/réseau de destination en configurant un chemin de test prioritaire identifiant chaque paire de liaisons de réseau de transit/réseau de destination, dans le routeur (202) à l'instant de la mesure de qualité de trajet et en le retirant après la mesure ;
évaluer, à la suite des mesures de qualité de trajet, si une première paire de liaisons de réseau de transit/réseau de destination est une candidate pour un réacheminement vers une deuxième paire de liaisons de réseau de transit/réseau de destination ; et
faciliter, en réponse à la satisfaction d'un critère d'évaluation de trajet donné, un réacheminement de la première vers la deuxième paire de liaisons de réseau de transit/réseau de destination.

2. Dispositif selon la revendication 1, comprenant en outre une interface pour permettre le réglage desdits un ou plusieurs paramètres configurables.

3. Dispositif selon la revendication 2, dans lequel les paramètres configurables comprennent un type de sonde.

4. Dispositif selon la revendication 3, dans lequel le type de sonde est un paquet ICMP.

5. Dispositif selon la revendication 2, dans lequel les paramètres configurables comprennent une liste identifiant des paires de liaisons de réseaux de destination à évaluer.

6. Dispositif selon la revendication 2, dans lequel les paramètres configurables comprennent une adresse IP donnée dans un réseau de destination donné.

7. Dispositif selon la revendication 1, dans lequel les moyens sont en outre agencés, en réponse à la satisfaction du critère d'évaluation de trajet donné, pour délivrer une recommandation illustrant un réacheminement de la première vers la deuxième paire de liaisons de réseau de transit/réseau de destination.

8. Dispositif selon la revendication 1, dans lequel les moyens sont agencés pour configurer le chemin de test dans le routeur en établissant une session d'interconnexion d'égal à égal BGP interne (iBGP) sur laquelle des informations de mise à jour d'acheminement identifiant le chemin de test sont transférées.

9. Dispositif selon la revendication 1, dans lequel les moyens sont agencés pour configurer le chemin de test dans le routeur en établissant une connexion sécurisée entre le dispositif et un programme de configuration s'exécutant dans le routeur.

10. Procédé de commande d'un routeur à rattachement multiple (202) pouvant être connecté à une pluralité de réseaux de destination (212, 214, 216) par l'intermédiaire au moins de premier et deuxième réseaux de transit (208, 210), **caractérisé par** les étapes consistant à :
effectuer périodiquement des mesures de qualité de trajet pour chaque trajet d'un ensemble de trajets comprenant des paires de liaisons de réseau de transit/réseau de destination, dans lequel un chemin de test prioritaire identifiant chaque paire de liaisons de réseau de transit/réseau de destination est configuré dans le routeur (202) à l'instant de la mesure de qualité de trajet et retiré ensuite après la mesure ;
à la suite des mesures de qualité de trajet, évaluer si une première paire de liaisons de réseau de transit/réseau de destination est une candidate pour un réacheminement vers une deuxième paire de liaisons de réseau de transit/réseau de destination ; et
en réponse à la satisfaction d'un critère d'évaluation de trajet donné, faciliter un réacheminement de la première vers la deuxième paire de liaisons de réseau de transit/réseau de destination.

11. Procédé selon la revendication 10, dans lequel les mesures de qualité de trajet sont effectuées au moyen de paquets sortants ICMP.

12. Procédé selon la revendication 10, dans lequel le meilleur réseau de transit pour un réseau de destination (212, 214, 216) donné est sélectionné conformément à un algorithme d'évaluation de trajet donné.

13. Routeur à rattachement multiple (202) pouvant être connecté à une pluralité de réseaux de destination (212, 214, 216) par l'intermédiaire au moins de premier et deuxième réseaux de transit (208, 210), **caractérisé par** des moyens agencés pour :
lancer, conformément à un ensemble d'un ou de plusieurs paramètres configurables, des mesures de qualité de trajet périodiques pour chaque trajet d'un ensemble de trajets comprenant des paires de liaisons de réseau de transit/réseau de destination en configurant un chemin de test prioritaire identifiant chaque paire de liaisons de réseau de transit/réseau de destination dans le routeur à l'instant de la mesure de qualité de trajet et en le retirant après la mesure ;
évaluer, à la suite des mesures de qualité de trajet, si une première paire de liaisons de réseau de transit/réseau de destination est une candidate pour un réacheminement vers une deuxième paire de liaisons de réseau de transit/réseau de destination ; et
faciliter, en réponse à la satisfaction d'un critère d'évaluation de trajet donné, un réacheminement de la première vers la deuxième paire de liaisons de réseau de transit/réseau de destination.
